# EUROPEAN PATENT APPLICATION

(11) **EP 1 496 018 A1**
(43) Date of publication of application: **12.01.2005**
(21) Application number: 02798392.3
(22) Date of filing: 27.12.2002
(51) Int. Cl.: C02F 1/463

(54) **METHOD FOR CLEANING POLLUTED WATER**

(30) Priority: 16.04.2002 RU 2002109766
(71) Applicant: Dmitriev, Viktor Vladimirovich, Moscow, 107066 (RU); Abrosimov, Mikhail Viktorovich, St. Petersburg (RU)
(72) Inventor: Dmitriev, Viktor Vladimirovich, Moscow, 107066 (RU); Abrosimov, Mikhail Viktorovich, St. Petersburg (RU)
(74) Representative: W.P. Thompson & Co.
(86) International application number: PCT/RU2002/000563
(87) International publication number: WO 2003/086982

(57) **Abstract**

The method for polluted water treatment consists in that an electrocoagulation process is performed in reiterated cycles, each of which comprises feeding a dose of polluted water to an electrocoagulator, and first an initial pressure of from 0.01 to 0.1 mPa is established over the surface of the dose of polluted water, then the pressure is increased during the electrocoagulation process to as high as 0.1 to 2.5 mPa. Thereupon the dose of the treated water is withdrawn and the pressure is reduced to the initial level, and the cycles are repeated at a frequency of from 0.01 to 0.0001 Hz.

## Description

### Technical Field

The present invention relates to water treatment and more specifically it concerns a method for treating polluted water, domestic and industrial sewage inclusive.

### Background Art

At present the problem of treating polluted water becomes still more and more urgent. As a rule, all polluted water contain a broad range of impurities, oil products inclusive, so that to find the content of which of the components of pollutants or contaminants is predominant is a rather complicated task.

Methods of treating polluted water known heretofore provide for too a low degree of treatment of polluted water with an adequate treatment capacity of the method or a sufficient degree of treatment but with respect to some individual impurities only, or else high enough treatment capacity and satisfactory quality but involve high power consumption and economic expenditures.

One of the most widespread methods of treating polluted water is an electrocoagulation process carried out in a continuous flow of polluted water being treated.

Known in the present state of the art is an electrocoagulation method for treating polluted water (application WO 99/26.887), consisting in that polluted water is fed continuously to an electrocoagulator which appears as a hermetically sealed container accommodating electrodes arranged along the direction of flow of the water being treated.

One more method of electrolytically treating polluted water (US Pat. #5,531,865 A) consisting in that large-size impurity particles are let to settle down, whereupon the polluted water under process is subject to electrocoagulation.

As a result, an ion flow is established between the electrodes under the effect of a voltage applied, said ions being then attached to suspended particles to form flocs which are free to settle down in the bottom portion of the electrocoagulator interior space.

However, there occurs passivation of the electrode plates during the electrocoagulation process, and hence the ion flow decreases, whereby the treatment efficiency of polluted water is affected, too.

A group of methods for polluted water treatment is known to use heretofore, wherein the electrocoagulation process is effected *in vacuo* under continuously feeding polluted water to the electrocoagulator. The electrocoagulation process over, the water under treatment is subjected to further mechanical or chemical effects aimed at ameliorating the quality of water being treated.

According to one of the heretofore-known methods of treating oil-polluted water (cf. RF Patent #2,146,655), electrocoagulation under vacuum is carried out, whereupon the water under treatment is subjected to separated in an IR radiation spectrum with a specific heating power of from 0.1 to 10.0 kW/cu.m and a pressure of 0.002-0.07 mPa.

However, during the vacuum electrocoagulation process the degree of destabilization of a colloidal system is increased due to a change in the pressure of oil products. This in turn reduces water solubility of the oil products, whereby hydrocarbons are released to form an optically inhomogeneous liquid consisting of a master phase (water) and a finely divided heterogeneous phase, both of them differing substantially in IR-spectrum radiation absorption factor. The finely divided hydrocarbon phase is intensely heated due to absorption of the IR-spectrum radiation, followed by water superheating under vacuum to form a vapor phase at a water-hydrocarbons phase boundary around hydrocarbon particles. In this case hydrocarbons featuring high degree of solubility are left in the water and are then withdrawn by ozonation.

However, in the course of electrocoagulation process a coagulation current is liable to decrease depending on the operating time of the plate-shaped electrodes, otherwise speaking the plates become passivated. It is generally agreed that passivation results from the onset of an oxide film on the surface of the electrode plates, whereby electrical resistance is increased and hence coagulation current is reduced which in turn affects adversely the efficiency of the entire sewage water treatment process.

Another method of treating oil-polluted water (cf. RF Patent #2,146,655) is known to comprise vacuum electrocoagulation followed by gradual water separation in a gravitational field at a pressure of from 0.002 to 0.07 mPa and with a ratio between the area of water surface being evacuated and the volume thereof ranging from 0.2 and 1.0, and floatation in the field of an IR-spectrum electromagnetic radiation at a wavelength of from 8·10⁻⁷ to 5·10⁻⁵ m.

When oil-polluted sewage water is subjected to separation in a gravitational field, said sewage water containing suspended matters, solid particles and hydrocarbons whose density values differ widely from one another and from that of water, there are formed flows of masses of isolated impurities moving in opposite directions. Heavy impurities (i.e., suspended matters, sand, etc.) move along with water in the direction of the gravitational field and are gathered at the container bottom using known devices, while light-weight impurities are accumulated at the water surface.

Once the water under treatment has been separated from impurities having different densities, it is subjected to floatation in the field of an IR-spectrum radiation and the impurities having neighbor density values but differing in thermophysical properties other than those of water. The essence of the floatation treatment resides in that he finely divided heterogeneous phase is subjected to intense heating due to absorption of the magnetic field energy within said range of the IR-spectrum wavelengths till a temperature of water superheating to for a vapor phase at the phase boundary.

The water treatment method discussed before is also characterized by a reduced coagulation current resulting, as in the abovedescribed method, in adversely affected efficiency of the treatment method.

Still one more method for treating oil-polluted sewage water is known (cf. RF Patent #2,120,411) to be the closest technical solution consisting in that the process of electrocoagulation of sewage water is carried out at a pressure over the water surface of from 0.01 to 0.05 mPa, whereupon the water under treatment is let to pass through a sorbent in the capacity of which use is made of polyacrylamide fiber. To enhance the degree of treatment attainable by said method, water under treatment is subjected to ozonation at the terminal stage of the treatment procedure.

As it has already been stated hereinbefore, sewage water contains impurities differing in density and thermophysical properties. Said method has but a restricted field of application because of its not providing a differentiated effect on the various impurities which results in an inadequately high efficiency of polluted water treatment. That is why said method is applicable to the sewage water having a defined and sufficiently stable composition of impurities.

Moreover, use of polyacrylamide fiber as a sorbent involves a rather frequent suspension of the treatment process for the sorbent renewal, since the polyacrylamide fiber is an expendable item and itself becomes a source of secondary contamination in the course of water treatment.

Furthermore, ozonation is a low-efficient though very costly water treatment procedure, thus rising the cost of the water treatment process techniques, whereas the degree of water treatment and the throughput capacity of the equipment remain inadequately high.

Alongside with the aforelisted specific features of the method under discussion, there occurs also a reduced sewage water treatment efficiency due to passivation of the electrode plates in the course of electrocoagulation which has been dealt with in detail hereinbefore.

Like in other heretofore-known water treatment methods discussed before, electrocoagulation is carried out at a constant pressure in a continuous flow of water under treatment.

### Disclosure of the Invention

It is a specific object of the present invention to provide a method for treatment of polluted water, which is instrumental in attaining a stabilized electrocoagulation process due to maintaining a coagulation current at a preset level so as to provide high degree of polluted water treatment for a broad range of impurities contained therein.

Said object is accomplished due to the fact that in a method for treating oil-polluted water comprising electrocoagulation of said water, according to the invention, the coagulation process is carried out in reiterated cycles during each of which a next dose of polluted water is fed to the electrocoagulator while an initial pressure is established over said water, ranging between 0.01 and 0.1 mPa, whereupon the electrocoagulation is carried out and the pressure is raised to as high as within 0.1 and 2.5 mPa, after which said dose of treated water is withdrawn and the pressure reduced to the initial level, said cycles are repeated at a frequency lying within 0.01 and 0.0001 Hz.

It is due to a cyclic pressure variation during the electrocoagulation procedure that electrolysis gas is prevented from adhering to the anode plates which in turn excludes anode passivating and stabilizes the coagulation current magnitude at a level effective at the beginning of the electrocoagulation process.

It is expedient that the electrocoagulation process be followed by gravitational separation of the treated water at a pressure of from 0.1 to2.5 mPa or said water be subjected to separation in an IR-spectrum electromagnetic radiation with a specific heating power of from 0.1 to 10 kW/cu.m.

The aforementioned process steps that follow the electrocoagulation process at a variable pressure make it possible to attain the polluted water treatment characteristics 5 or 6 times as fast as by the heretofore-known methods.

### Brief Description of the Drawings

In what follows the present invention is illustrated by a detailed description of specific embodiments thereof, examples and accompanying drawings, wherein:
FIG.1 is a pressure curve during the electrocoagulation process; and
FIG.2 is coagulation current curve during the electrocoagulation process.

### Best Method of Carrying Out the Invention

The method for treating oil-polluted water proposed therein is carried into effect as follows.

A dose of polluted water is fed by a vacuum pump to an electrocoagulator which appears as a hermetically sealed container accommodating electrodes disposed in a lower portion thereof, and an initial pressure is established over the surface of said water, said pressure ranging within 0.01 and 0.1 mPa.

Then an electrocoagulation process is initiated in the course of which the pressure effective over the surface of said dose of polluted water is raised to a value lying between 0.1 and 2.5 mPa.

A minimum and a maximum pressure value depends on technological capabilities of the vacuum equipment and on strength characteristics of the technological equipment involved, respectively.

Whenever badly polluted water is to be treated, a minimum and a maximum value of the initial pressure is set to 01 and 2.5 mPa, respectively.

Optimum values of the minimum and maximum pressure are determined experimentally for each specific kind of polluted water.

Once a maximum pressure value is attained, the dose of the treated water is withdrawn from the electrocoagulator, thus terminating a cycle of the water treatment procedure.

Next the pressure in the electrocoagulator is reduced again to the initial value, and the entire process is repeated in the aforementioned sequence.

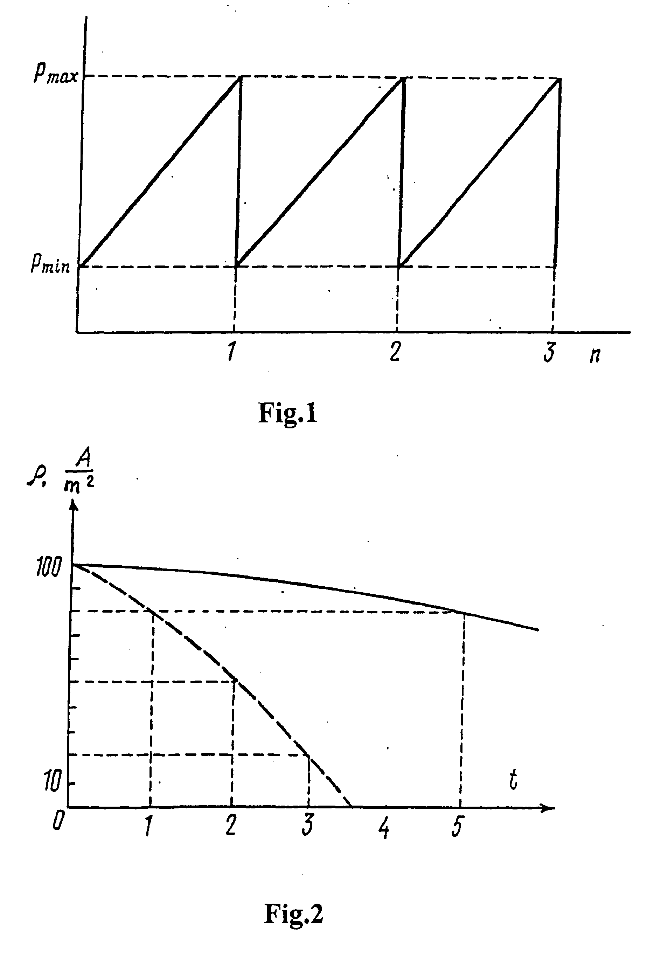

Hence unlike the known methods the method being claimed is carried out in reiterated cycles during each of which the pressure is varied from a minimum to a maximum during treatment of a dose of polluted water, which is illustrated by a curve presented in FIG.1.

It is common knowledge that impurity particles contained in polluter water are liable to consolidate and settle down in the lower container portion, while the coagulation current is liable to reduce depending on the operating time of the electrodes.

As it has already been stated hereinbefore, reduction of the coagulation current occurs due to the onset of an oxide film on the surface of the electrode plates which results in an increase in electrical resistance.

However, the authors of the present invention were managed to find experimentally another cause of reduction of coagulation current which affects to a larger extent the efficiency of polluted water treatment process than the onset of the oxide film on the electrode surface.

This can be explained by the fact that the anode and cathode plates are smooth before the starting of the electrocoagulation process, but the anode plate is liable to wear out unevenly in the course of operation, whereby its surface becomes rough. Gas bubbles appearing in the dents and pits of the anode surface due to water electrolysis form a gas curtain, thus partially isolating the anode surface from the water under treatment. In view of the fact that gas electrical conductance is much less than that of water, and due to reduction of an effective anode surface area the coagulation current decreases.

At a low pressure over the water surface gas bubbles are being expanded to become and more buoyant and are torn off the anode surface. Thereby the anode surface is cleaned and its effective area increases and the coagulation current increases, too.

In a definite period of time gas bubbles start forming again to reduce the coagulation current.

To eliminate said adverse effect the pressure is raised to compress air bubbles whereby the effective anode surface increases again.

It is due to a cyclic pressure variation during the electrocoagulation procedure that electrolysis gas is prevented from adhering to the anode plates which in turn excludes anode passivation and stabilizes the coagulation current magnitude at a level effective at the beginning of the electrocoagulation process.

Frequency of pressure variation depends on the throughput capacity of the water-treatment plant used and is monitored against the coagulation current value, i.e., the higher the plant throughput capacity the higher the pressure variation frequency.

It is found experimentally that the pressure variation frequency lies within 0.01 and 0.0001 Hz.

With the pressure value below 0.01 mPa an intense gas evolution occurs which modifies substantially the flow dynamics during mass transfer of impurity particles since the gas filling factor is equal to 0.3.

With the pressure value above 0.01 mPa no withdrawal of gases occurs, whereby redox processes in the near-the-electrode space is arrested.

To further illustrate the advantageous features of the herein-proposed method, FIG. 2 shows a graphic chart of coagulation current density variation vs water treatment plant operation time displaying curves of current density variation according to the proposed method (indicated with a solid line), and according to the prototype method (indicated with a dotted line). Plotted against the Y-axis is coagulation current density ρ = Ik/Sn, wherein Ik is coagulation current and Sn is the electrode plate area.

As is evident from the above graphic chart, anode passivation occurs after a period of 3.5 days of continuous conducting of the method known heretofore, whereas according to the method proposed herein the coagulation current density decreases for said period of time as low as by 10% which demonstrates illustratively advantages of the proposed method over the known one.

According to the method proposed herein, the electrocoagulation process is followed by gravitational water separation at a pressure of 0.1 to 2.5 mPa, or by water separation in an IR-spectrum electromagnetic radiation with a specific heating power of from 0.1 to 10 kW/cu.m.

The former operation is carried out in the event that there are provided sufficiently large containers for a prolonged water settling after electrocoagulation.

Whenever the separation process need be accelerated, the latter operation is used. In this case, in order to establish an IR-spectrum electromagnetic radiation field use is made of quartz heat radiators which generate a radiant flux in an infrared radiation spectrum at wavelengths most efficiently acting on the floatation process and providing a maximum radiant energy absorption factor for a finely divided heterogeneous phase, and a minimum such factor for water.

For the sake of a comparative analysis of the herein-proposed method and the known one given below are the test results of a polluted water treatment process of the same composition under adequate conditions.

Table 1 represents the results of comparison tests of the methods for treatment of oil-polluted sewage water.

**Table 1**

| Method | Content of oil products, mg/l | | | | |
|---|---|---|---|---|---|
| | initial | after electro-coagulation | After gravitational separation | | |
| | | | 1 hr | 2 hrs | 12 hrs |
| Herein proposed | 10±2 | 0,5±0,2 | 0,4±0,1 | 0,3±0,1 | 0,05±0,01 |
| Prototype | 10±2 | 1,1±0,3 | 0,9±0,2 | 0,7±0,2 | 0,3±0,1 |
| Herein proposed | 3000±30 | 0,6±0,3 | 0,5±0,1 | 0,3±0,1 | 0,05±0,01 |
| Prototype | 3000±30 | 1,7±0,3 | 1,2±0,3 | 1,0±0,2 | 0,7±0,1 |

It is evident from Table 1 that the method proposed herein allows of treating both polluted water with a relatively low degree of pollution (e.g., storm water discharge from gas-filling stations which is a principal guide mark for assessing polluted water treatment efficiency) and badly contaminated water (such as bilge water discharge in ships). Oil products content after gravitational water separation according to the method proposed herein is as low as 0.3 mg/l in a two-hour period, whereas such results given by the prototype are attained as late as in 12 hours. Moreover, a degree of water treatment equal to 0.05 mg/l is not attainable whatever by the prototype when treating badly polluted water.

Table 2 displays the results of treating oil-polluted sewage water at various pressure values.

**Table 2**

| Pressure over water surface, mPa | | Content of oil products, mg/l | | | | |
|---|---|---|---|---|---|---|
| | | initial | after electro-coagulation | After gravitational separation | | |
| | | | | 1 hr | 2 hrs | 12 hrs |
| Prototype | 0,01 | 10±2 | 2,1±0,3 | 0,5±0,1 | 0,3±0,1 | 0,3±0,1 |
| | 0,02 | | 1,1±0,3 | 0,6±0,1 | 0,4±0,1 | 0,2±0,1 |
| | 0,05 | | 1,3±0,3 | 0,7±0,1 | 0,5±0,1 | 0,2±0,1 |
| | 0,1 | | 2,0±0,3 | 1,2±0,1 | 0,7±0,1 | 0,5±0,1 |
| Herein proposed method | 0,01÷0,1 | 10±2 | 1,7±0,1 | 0,6±0,1 | 0,4±0,1 | 0,15±0,01 |
| | 0,02÷0,1 | | 0,8±0,1 | 0,5±0,1 | 0,3±0,1 | 0,05±0,01 |
| | 0,05÷0,1 | | 0,9±0,1 | 0,5±0,1 | 0,4±0,1 | 0,1±0,01 |
| | 0,05÷0,25 | | 1,8±0,1 | 0,7±0,1 | 0,5±0,1 | 0,2±0,1 |

As is evident from Table 2, in 12 hours of gravitational separation, operating indices of the method proposed herein are twice as high as those of the known method. And best indices are attainable at a pressure of 0.05 mPa at the beginning of the treatment process.

**Table 3**

| Pressure over water surface, mPa | | Content of suspended matter, mg/l | | | | |
|---|---|---|---|---|---|---|
| | | initial | after electro-coagulation | after gravitational separation | | |
| | | | | 1 hr | 2 hrs | 12 hrs |
| Prototype | 0,01 | 120 | 115 | 8,0 | 5,0 | 3,5 |
| | 0,02 | | 112 | 6,4 | 4,1 | 3,1 |
| | 0,05 | | 118 | 11,2 | 7,3 | 4,4 |
| | 0,1 | | 112 | 12,0 | 8,4 | 4,7 |
| Herein proposed method | 0,01÷0,1 | 120 | 114 | 5,3 | 4,2 | <2,0 |
| | 0,02÷0,1 | | 112 | 4,1 | 3,3 | <2,0 |
| | 0,05÷0,1 | | 118 | 5,7 | 4,4 | 2,6 |

As is evident from the test results presented before, it is only tracer amounts of impurities (<2.0 mg/l) that are detected after a 12-hour gravitational water separation proceduree, whereas the amount of impurities is as high as about 5 mg/l.

Hence it is due to a cyclic pressure variation during the electrocoagulation process that efficiency of the method is enhanced and high performance characteristics of polluted water treatment are attained.

### Industrial Applicability

The present invention can find application for treating polluted water of diverse origin, such as oil-polluted water used for drilling and oil and gas production and processing; process water used for washing transportation facilities used in conveying oil products and organic compounds (cisterns, tanker-ships; process water used for washing railway rolling stock; process water used at industrial enterprises and in food and textile industries; drainage water in underground railway vehicular traffic tunnels; sewage and storm water at motor-car washing stations and in enterprises, sewage water in motor ships and river and sea vessels; naturally occurring oil-polluted water. In addition, the present invention can find utility when used in water preparation for technological needs of enterprises, apartment houses, river and sea vessels, and for drinking water supply.

## Claims

1. A method for polluted water treatment consisting in that polluted water is subjected to electrocoagulation carried out in reiterated cycles;
when carrying out each electrocoagulation cycle a fresh dose of polluted water is fed to the electrocoagulator,
an initial pressure is established over the surface of the dose of polluted water, said pressure ranging between 0.01 and 0.1 mPa, and the water is subjected to electrocoagulation, in the course of which the pressure over the surface of the dose of polluted water is raised to as high as 0.1 to 2.5 mPa, whereupon the dose of the treated water is withdrawn and the pressure let to drop down to the initial level,
said cycles are repeated at a frequency lying within 0.01 and 0.0001 Hz.

2. The method of claim 1, **CHARACTERIZED in that** the electrocoagulation process is followed by gravitational separation of the treated water at a pressure of from 0.1 to 2.5 mPa.

3. The method of claim 1, **CHARACTERIZED in that** that the electrocoagulation process is followed by separation of the treated water in an IR-spectrum electromagnetic radiation having a specific heating power of from 0.1 to 10 kW/cu.m.
